# EUROPÄISCHE PATENTSCHRIFT

(11) **EP 2 803 888 B1**
(45) Veröffentlichungstag und Bekanntmachung des Hinweises auf die Patenterteilung: **08.07.2020**
(21) Anmeldenummer: 14001661.9
(22) Anmeldetag: 12.05.2014
(51) Int. Cl.: F16K 31/46

(54) **Stellantrieb**
Actuator
Mécanisme de commande

(30) Priorität: 13.05.2013 DE 102013008033
(43) Veröffentlichungstag der Anmeldung: 19.11.2014
(73) Patentinhaber: SIPOS Aktorik GmbH, 90518 Altdorf (DE)
(72) Erfinder: Müller, Peter, 91126 Schwabach (DE); Raithel, Ulrich, 91052 Erlangen (DE); Chluba, Günther, 90451 Nürnberg (DE); Fichte, Vladimir, 90451 Nürnberg (DE)
(74) Vertreter: Börjes-Pestalozza, Henrich

(56) Entgegenhaltungen:
- US-A1- 2008 284 549
- US-A1- 2011 057 131
- US-B1- 7 784 490

## Beschreibung

Die Erfindung betrifft einen Stellantrieb, insbesondere einen elektrischen Stellantrieb, mit wenigstens einem Bedienelement, das außenseitig an einem Gehäuse angeordnet ist.

Stellantriebe werden beispielsweise zur Betätigung von Ventilen in Anlagen eingesetzt. Oft ist erforderlich, Einstellungen am Stellantrieb vor Ort vorzunehmen und/oder den Stellantrieb vor Ort - also nicht über eine Leitwarte - zu betätigen. Hierzu ist eine Vielzahl von Bedienelementen an dem Stellantrieb ausgebildet, häufig in Form von Tastern.

Der Erfindung liegt die Aufgabe zugrunde, die Bedienbarkeit eines Stellantriebs zu verbessern.

Aus US 2011/0057131 A1 ist ein manuell bedienbares Antriebsmodul bekannt, bei welchem eine Magnetanordnung in einem Kunststoffgehäuse einer handbedienten Vorrichtung angeordnet ist und bei welchem die Magnetanordnung zu einer Magnetfeldsensor-Anordnung derart ausgerichtet ist, dass der Einfluss von Störfeldern praktisch ausgeschlossen ist.

Aus US 2008/0284549 A1 ist ein fehlertolerantes Festkörper-Drucktaster-Steuerungssystem mit eingebauter Diagnostik bekannt, bei welchem eine Permanentmagnet-Anordnung komplementär zu einer Magnetfeldsensor-Anordnung gewählt ist.

Aus US 7,784,490 B1 ist ein Ventilüberwachungs- und Steuerungssystem bekannt, bei welchem ein Griff einen passend dimensionierten Magneten aufweist, welcher einen Hall-Sensor beeinflusst, um Steuerungssignale zur Verwendung in einem Steuerungsschaltkreis für eine Statusanzeige eines entfernt angeordneten Ventils zu erzeugen.

Zur Lösung dieser Aufgabe werden erfindungsgemäß die Merkmale von Anspruch 1 vorgeschlagen. Insbesondere wird somit erfindungsgemäß bei einem Stellantrieb der eingangs beschriebenen Art vorgeschlagen, dass das Bedienelement um eine Achse dreh- und/oder schwenkbar an dem Gehäuse angeordnet ist, dass an dem Bedienelement wenigstens ein magnetisches Element ausgebildet ist und dass im Inneren des Gehäuses ein Magnetfeldsensor angeordnet ist, mit welchem eine Lage und/oder eine Lageänderung des magnetischen Elements erfassbar ist. Hierbei kann das magnetische Element als magnetfelderzeugendes Element, beispielsweise aus einem Eisen, Nickel und/oder Kobalt enthaltenden Material und/oder einem ferro- oder ferrimagnetischen Material, oder als magnetfeldveränderndes Element, beispielsweise aus einem Stahl enthaltenden Material und/oder einem para- oder diamagnetischen Material, ausgebildet sein. Die Dreh- und/oder Schwenkbarkeit des Bedienelements hat den Vorteil, dass eine Vielzahl von unterscheidbaren Bedienstellungen einstellbar ist. Somit ist die Zahl der erforderlichen Bedienelemente am Stellantrieb reduzierbar. Die erfindungsgemäße Übertragung der Lage und/oder Lageänderung des Bedienelements über ein mit dem Bedienelement mitbewegtes Magnetfeld ins Innere des Stellantriebs hat den Vorteil, dass keine Durchbrechung eines Gehäuses erforderlich ist, um den Stellantrieb zu betätigen. Daher sind aufwendige Abdichtmaßnahmen am Bedienelement verzichtbar, und das Bedienelement ist leichter bedienbar, insbesondere leichtgängiger ausbildbar.

Bevorzugt ist die Achse senkrecht zu einer Oberfläche des Gehäuses ausgerichtet. Es sind jedoch auch Ausgestaltungen fertigbar, bei denen die Achse parallel zu einer Oberfläche des Gehäuses ausgerichtet ist.

Bei einer Ausgestaltung der Erfindung kann vorgesehen sein, dass das Bedienelement anschlagfrei drehbar angeordnet ist. Es sind somit beliebig viele Umdrehungen am Bedienelement ausführbar. Bevorzugt ist das Bedienelement in beide Drehrichtungen anschlagfrei drehbar angeordnet. Von Vorteil ist dabei, dass die Funktion des Bedienelements unabhängig von der Orientierung, in welcher der Stellantrieb aufgestellt wird, definierbar ist. Denn durch die anschlagfreie Ausbildung der Drehbarkeit kann eine Drehbewegung im Uhrzeigersinn von einer gegenläufigen Drehbewegung entgegen dem Uhrzeigersinn unterschieden werden. Ein Anschlag der Drehbewegung, der bei einer Aufstellung in unterschiedlichen Orientierungen in unterschiedlichen Raumpositionen liegen würde, ist nicht vorhanden. Die Bedienung ist vielmehr vollständig drehsymmetrisch ausbildbar und bleibt daher unabhängig von der Orientierung der Aufstellung des Stellantriebs im Raum für den Benutzer gleich.

Bei einer Ausgestaltung der Erfindung kann vorgesehen sein, dass das Bedienelement an dem Gehäuse zusätzlich entlang der Achse verschiebbar angeordnet ist. Bevorzugt ist das Bedienelement entlang der Achse auf das Gehäuse zu bewegbar, beispielsweise drückbar. Von Vorteil ist dabei, dass eine zusätzliche Bedienfunktion mit einer zusätzlichen Bedienrichtung bereitstellbar ist. Somit kann beispielsweise das Drehen oder Schwenken des Bedienelements eine Funktion oder einen Bedienschritt anwählen, die oder der anschließend durch Drücken des Bedienelements bestätigbar ist. Das Bedienelement ist somit mit einem zusätzlichen Freiheitsgrad ausrüstbar. Das Bedienelement ist somit als Drehdrückknopf ausbildbar.

Alternativ, insbesondere bei einer parallelen Ausrichtung der Achse zur Oberfläche, kann vorgesehen sein, dass das Bedienelement quer zur Achse verschiebbar angeordnet ist. Somit ist ebenfalls ein zusätzlicher Freiheitsgrad als zusätzliche Bedienrichtung am Bedienelement einrichtbar, der zur Bestätigung einer angewählten Funktion und/oder eines angewählten Listeneintrags verwendbar ist.

Bei einer Ausgestaltung der Erfindung kann vorgesehen sein, dass wenigstens eine Rasteinrichtung zur Fixierung des Bedienelements in wenigstens einer Position, bevorzugt in mehreren Positionen, ausgebildet ist. Von Vorteil ist dabei, dass eine Betätigung des Bedienelements fühlbar ist, da durch die Rasteinrichtung ein überwindbarer Widerstand gegen die Betätigung aufbaubar ist.

Hierbei kann vorgesehen sein, dass das Bedienelement durch die Rasteinrichtung in einer Bedienrichtung fixiert und in einer weiteren Bedienrichtung geführt ist. Von Vorteil ist dabei, dass dabei unterschiedliche Bedienrichtungen, beispielsweise eine Drehbewegung und eine Verschiebebewegung, für das Bedienelement vorsehbar sind, wobei eine Betätigung in der ersten Bedienrichtung durch überwindbare Widerstände, die die Rasteinrichtung entwickelt, erfühlbar ist. Von Vorteil ist weiter, dass eine Betätigung in der zweiten Bedienrichtung einfach ermöglicht ist, ohne dass eine unbeabsichtigte Verstellung des Bedienelements in der ersten Bedienrichtung erfolgt.

Besonders günstig ist es, wenn die erste Bedienrichtung eine Drehbewegung ist und/oder wenn die Rasteinrichtung mehrere gegeneinander drehversetzte Positionen des Bedienelements definiert. Von Vorteil ist dabei, dass eine Drehbewegung des Bedienelements, welches eine Vielzahl von unterschiedlichen Positionen, die gegeneinander um einen Winkel versetzt sind, aufweist, einfach kontrollierbar ist.

Eine besonders einfache Ausgestaltung kann vorsehen, dass die Rasteinrichtung ein vorzugsweise mit einer Feder beaufschlagtes Rastelement aufweist, welches in eine Vielzahl von gegeneinander versetzten Rastaufnahmen eingreifen kann. Beispielsweise kann die Rasteinrichtung als Kugelraste oder als Stiftraste oder auf andere Weise ausgebildet sein.

Es kann somit vorgesehen sein, dass eine Drehbewegung des Bedienelements in Stufen durch die Rasterung erfolgt. Hierdurch kann der Nutzer eine Rückmeldung über die Drehbewegung erhalten. Mit jeder Raststellung kann somit eine Verstellung in einem Menü oder einer Erhöhung eines Wertes eines Parameters ausgelöst sein. Die Rasterung kann hierbei die Übernahme des ausgewählten Menüpunktes oder des eingestellten Wertes beim Eindrücken des Bedienelements erleichtern. Eine unerwünschte Verstellung des eingestellten Wertes bei Drücken des Bedienelements zur Übernahme ist somit vermeidbar.

Bei einer Ausgestaltung der Erfindung kann vorgesehen sein, dass der Magnetfeldsensor wenigstens einen Hall-Sensor aufweist. Von Vorteil ist dabei, dass mit einem Hall-Sensor die Änderung des magnetischen Feldes, das durch das wenigstens eine magnetische Element erzeugt wird, aufgrund einer Bewegung des Bedienelements mit dem Magnetfeldsensor gut erfassbar ist. Von Vorteil ist weiter, dass ein Hall-Sensor sensitiv auf ein magnetisches Feld ist, das senkrecht zu einer Fläche steht. Hierdurch ergibt sich eine Richtungsempfindlichkeit, durch welche unterschiedliche Bewegungstypen des Bedienelements gut voneinander unterscheidbar sind.

Bei einer Ausgestaltung der Erfindung kann vorgesehen sein, dass der Magnetfeldsensor wenigstens einen GMR(Giant Magnetoresistance, Riesenmagnetowiderstand)-Sensor aufweist. Somit ist ein alternativ verwendbarer Magnetfeldsensor mit brauchbarer Empfindlichkeit verwendbar.

Bei einer Ausgestaltung der Erfindung kann vorgesehen sein, dass der Magnetfeldsensor zur dreidimensionalen Erfassung der Lage des magnetischen Elements eingerichtet ist. Bevorzugt kann hierbei vorgesehen sein, dass der Magnetfeldsensor aus mehreren Sensoren zusammengesetzt ist, die jeweils unterschiedliche Komponenten des Magnetfelds vom Bedienelement messen. Somit sind vollständige Informationen über die Lage und/oder Lageänderung des Bedienelements gewinnbar. Dies ist besonders günstig in dem Fall, dass das Bedienelement zusätzlich entlang der Achse verschiebbar ist.

Bei einer Ausgestaltung der Erfindung kann vorgesehen sein, dass eine Auswerteeinheit an den Magnetfeldsensor angeschlossen ist, die zur Bestimmung einer Geschwindigkeit der Lageänderung des wenigstens einen magnetischen Elements eingerichtet ist. Von Vorteil ist dabei, dass eine schnelle Betätigung von einer langsamen Betätigung unterscheidbar ist. Beispielsweise kann eine Schrittweite, mit der mittels des Bedienelements pro Betätigung in einer Liste oder in einem Wertebereich vorangeschritten wird, in Abhängigkeit von der Geschwindigkeit der Lageänderung des Bedienelements festlegbar sein. Auf diese Weise ist erreichbar, dass eine schnellere Betätigung schneller durch eine Liste und/oder einen Wertebereich führt.

Bei einer Ausgestaltung der Erfindung kann vorgesehen sein, dass das wenigstens eine magnetische Element einen Permanentmagneten aufweist. Von Vorteil ist dabei, dass keine Energie zur Erzeugung des Magnetfeldes erforderlich ist.

Bei einer Ausgestaltung der Erfindung kann vorgesehen sein, dass an dem Bedienelement zwei Permanentmagneten ausgebildet sind. Das Bedienelement weist somit wenigstens zwei magnetische Elemente auf, die voneinander beabstandet angeordnet sind. Vorzugsweise sind die Permanentmagnete gegensinnig zueinander ausgerichtet. Von Vorteil ist dabei, dass Streufelder minimierbar sind, indem die Bildung von geschlossenen Magnetfeldlinien in der Nähe des Magnetfeldsensors begünstig ist. Somit steht ein noch besser detektierbares Magnetfeld zur Verfügung.

Bei einer Ausgestaltung der Erfindung kann vorgesehen sein, dass das wenigstens eine magnetische Element wenigstens einen Para- oder Diamagneten aufweist. Von Vorteil ist dabei, dass ein magnetfeldveränderndes Element an dem Bedienelement ausgebildet ist, mit welchem ein Magnetfeld an dem Magnetfeldsensor beeinflussbar ist. Somit ist eine alternative Möglichkeit bereitgestellt, eine Betätigung des Bedienelements magnetisch zu detektieren.

Hierbei kann vorgesehen sein, dass ein bezüglich des Magnetfeldsensors unbeweglicher Permanentmagnet ausgebildet ist. Bevorzugt ist vorgesehen, dass dieser Permanentmagnet im Inneren des Gehäuses ausgebildet ist.

Bei einer Ausgestaltung der Erfindung kann vorgesehen sein, dass an dem Gehäuse eine Ausnehmung ausgebildet ist, in die das Bedienelement zumindest teilweise eingesetzt ist. Von Vorteil ist dabei, dass das Bedienelement mechanisch geschützt ist. Von Vorteil ist weiter, dass der Abstand zwischen dem Magnetfeldsensor und dem wenigstens einen magnetischen Element reduzierbar ist.

Bei einer Ausgestaltung der Erfindung kann vorgesehen sein, dass das Gehäuse zumindest im Bereich der Ausnehmung aus einem nicht-magnetischen Material, insbesondere aus Aluminium, aus einer Aluminiumlegierung oder aus Kunststoff, gefertigt ist. Von Vorteil ist dabei, dass die Magnetfeldlinien ungehindert oder nahezu ungehindert durch das Gehäuse durchtreten können. Somit ist eine genaue Erfassung der Lage und/oder der Lageänderung des Bedienelements durch das geschlossene Gehäuse erreichbar.

Bei einer Ausgestaltung der Erfindung kann vorgesehen sein, dass das Gehäuse nach außen abgedichtet ist. Somit ist ein Stellantrieb für einen Dauereinsatz unter rauen Bedingungen bereitstellbar. Von Vorteil ist, dass für die Informationsübertragung kein Durchbruch in dem Gehäuse ausgebildet werden muss.

Bei einer Ausgestaltung der Erfindung kann vorgesehen sein, dass die Ausnehmung durch einen auf das Bedienelement aufgesteckten Dichtring nach außen abgedichtet ist. Von Vorteil ist dabei, dass die Ausnehmung, welche das Bedienelement aufnimmt, nach außen abdichtbar ist. Eine Verschmutzung der Ausnehmung und ein Zusetzen der Ausnehmung sind vermeidbar. Das Eindringen von Wasser, welches in der Ausnehmung gefrieren und somit eine Bewegung des Bedienelements be- oder verhindern könnte, ist verhinderbar.

Bei einer Ausgestaltung der Erfindung kann vorgesehen sein, dass an dem Bedienelement wenigstens ein Ausgleichsraum ausgebildet ist, welcher über wenigstens einen Ausgleichskanal in eine, beispielsweise die erwähnte, Ausnehmung mündet. Von Vorteil ist dabei, dass ein Platz für die beim Drücken des Bedienelements verdrängte Luft bereitgestellt ist. Die Ausnehmung kann hierbei durch Betätigung des Bedienelements verkleinerbar sein.

Hierbei ist bevorzugt vorgesehen, dass ein Volumen des wenigstens einen Ausgleichsraums bei einer Betätigung des Bedienelements, insbesondere einer Drückbewegung, in dem Maße zunimmt, in welchem ein von dem Bedienelement in der Ausnehmung eingeschlossenes Volumen bei der Betätigung des Bedienelements vermindert ist. Von Vorteil ist dabei, dass alle Räume, die vorhanden sind, insbesondere der von dem Bedienelement eingeschlossene Raum der Ausnehmung und der wenigstens eine Ausgleichsraum, der bei Betätigung des Bedienelements auch überhaupt erst gebildet oder entstanden sein kann, über Ausgleichskanäle miteinander verbunden sind. Hierdurch wird ein sonst bei der Betätigung des Bedienelements in einer Bedienrichtung entstehender Über-oder Unterdruck, insbesondere bei Abschluss der Betätigung des Bedienelements, verhindert. Hierdurch ist ferner ein der Bedienung oder Betätigung entgegengesetzter Druck abbaubar, so dass eine leichte Betätigung ermöglicht werden kann. Darüber hinaus ist auf einfache Weise erreichbar, dass bei Loslassen des Bedienelements keine Luft von außen in die Ausgleichsräume oder die Ausnehmung gesaugt wird. Hierdurch ist verhinderbar, dass feuchte Außenluft in die Ausnehmung gelangen kann, um dort zu kondensieren und gegebenenfalls zu gefrieren.

Bei einer Ausgestaltung der Erfindung kann vorgesehen sein, dass an dem Bedienelement ein Federelement ausgebildet ist, mit welchem eine Rückstellkraft gegen eine Verschiebung entlang der Achse entwickelbar ist. Von Vorteil ist dabei, dass das Bedienelement nach einer Drückbetätigung selbsttätig in die Ausgangsposition rückführbar ist.

Bei einer Ausgestaltung der Erfindung kann vorgesehen sein, ein, beispielsweise das bereits erwähnte, Federelement ein Lagerelement beaufschlagt, welches das Bedienelement am Gehäuse abstützt. Vorzugsweise ist vorgesehen, dass das Lagerelement das Bedienelement in einer, beispielsweise in der bereits erwähnten, Ausnehmung abstützt. Von Vorteil ist dabei, dass ein Abstützpunkt für das Federelement bereitgestellt ist, der sich mit dem Bedienelement mitdrehen kann. Somit ist ein direkter Kontakt des Federelements mit dem raumfesten Gehäuse nicht erforderlich. Dies hat den Vorteil, dass eine Torsion des Federelements vermeidbar ist.

Bei einer Ausgestaltung der Erfindung kann vorgesehen sein, dass das Lagerelement stiftförmig ausgebildet ist. Von Vorteil ist dabei, dass das Lagerelement punktförmig auf dem Gehäuse aufliegen kann. Dies erleichtert die Drehbewegung des Bedienelements relativ zu dem Gehäuse.

Bei einer Ausgestaltung der Erfindung kann vorgesehen sein, dass das Lagerelement konzentrisch zur Achse ausgerichtet ist. Die konzentrische Anordnung hat den Vorteil, dass das Lagerelement eine minimale Bewegung an dem Gehäuse ausführt, wenn das Bedienelement gedreht und/oder verschwenkt wird. Hierdurch ergibt sich eine minimale Reibkraft und somit eine geringe Behinderung der Betätigungsbewegung des Bedienelements.

Bei einer Ausgestaltung der Erfindung kann vorgesehen sein, dass das Lagerelement das Gehäuse punktförmig berührt. Die punktförmige Berührung ist besonders günstig, wenn eine Reibung zwischen dem Lagerelement und dem Gehäuse vermindert werden soll.

Bei einer Ausgestaltung der Erfindung kann vorgesehen sein, dass eine Ansteuerungseinheit zur Generierung einer Listendarstellung von Listeneinträgen an einer Anzeigeeinheit eingerichtet ist, wobei das Bedienelement mit der Ansteuerungseinheit in einer Steuerverbindung steht, durch welche ein Drehen des Bedienelements um die Achse ein Wechseln zwischen den Listeneinträgen bewirkt. Von Vorteil ist dabei, dass ein Scrollen in der Liste mittels der Dreh-und/oder Schwenkbewegung intuitiv ausführbar ist. Ist das Bedienelement zusätzlich mittels einer Drückbewegung verschiebar, kann der jeweils angewählte Listeneintrag durch Drücken bestätigt werden.

Besonders günstig ist es dabei, wenn das Bedienelement mit einer bereits beschriebenen Rastvorrichtung in der Drehbewegung fixierbar und in der Drückbewegung führbar ist. Die Rasteinrichtung erleichtert somit eine Übernahme eines mit der Drehbewegung eingestellten Wertes oder ausgewählten Menüpunktes durch eine Betätigung mit der Drückbewegung. Eine ungewollte Drehbewegung des Bedienelements bei der Übernahme der eingestellten Werte oder Menüpunkte ist somit vermeidbar.

Bei einer Ausgestaltung der Erfindung kann vorgesehen sein, dass an dem Bedienelement ein Befestigungsmittel ausgebildet ist, an welchem ein Arretierungselement befestigbar ist. Von Vorteil ist dabei, dass das Bedienelement gegen eine unbefugte Benutzung schützbar ist. Das Arretierungselement kann zur Arretierung der Freiheitsgrade des Bedienelements eingerichtet sein. Es kann auch vorgesehen sein, das das Arretierungselement die Freiheitsgrade des Bedienelements unzugänglich macht.

Bei einer Ausgestaltung der Erfindung kann vorgesehen sein, dass das Bedienelement mit dem Arretierungselement abdeckbar ist. Von Vorteil ist dabei, dass ein unbefugtes und/oder versehentliches Betätigen des Bedienelements auf einfache Weise verhinderbar ist, indem das Bedienelement unter dem Arretierungselement unzugänglich gemacht wird.

Bei einer Ausgestaltung der Erfindung kann vorgesehen sein, dass das Arretierungselement formschlüssig mit dem Gehäuse zusammenwirkt, um eine Betätigung des Bedienelements zu verhindern. Von Vorteil ist dabei, dass das Arretierungselement an dem Gehäuse fixierbar ist. Somit ist eine Betätigung des Bedienelements mit dem Arretierungselement verhinderbar.

Bei einer Ausgestaltung der Erfindung kann vorgesehen sein, dass das Arretierungselement durch ein vorzugsweise abschließbares Sicherungselement formschlüssig mit dem Bedienelement und/oder mit dem Gehäuse verbindbar ist. Von Vorteil ist dabei, dass ein unbefugtes Entfernen des Arretierungselements verhinderbar ist.

Die Erfindung wird nun anhand eines Ausführungsbeispiels näher erläutert, ist jedoch nicht auf dieses Ausführungsbeispiel beschränkt. Weitere Ausführungsbeispiele ergeben sich durch Kombination der Merkmale einzelner oder mehrerer Ansprüche untereinander und/der mit einzelnen oder mehreren Merkmalen des Ausführungsbeispiels.

Es zeigt:
- Fig. 1: eine stark vereinfachte Schnittdarstellung eines Teils eines erfindungsgemäßen Stellantriebs mit einem Bedienelement,
- Fig. 2: eine Frontansicht des Stellantriebs aus Fig. 1,
- Fig. 3: eine Darstellung eines Zustands einer Anzeigeeinheit des Stellantriebs aus Fig. 1 und 2,
- Fig. 4: eine stark vereinfachte Schnittdarstellung eines Teils eines weiteren erfindungsgemäßen Stellantriebs,
- Fig. 5: eine Detailansicht des Bedienelements eines erfindungsgemäßen Stellantriebs und
- Fig. 6: eine Schnittdarstellung entlang A-A in Figur 5 mit einer erfindungsgemäßen Rasteinrichtung.

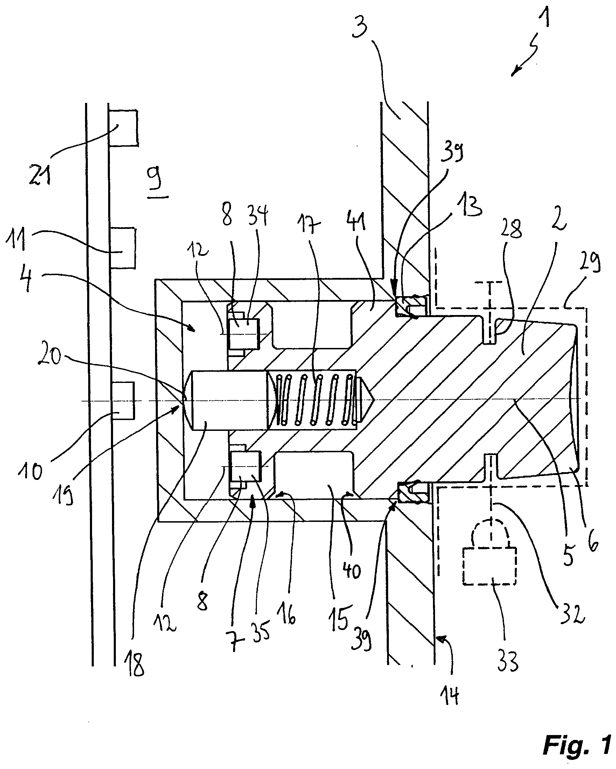

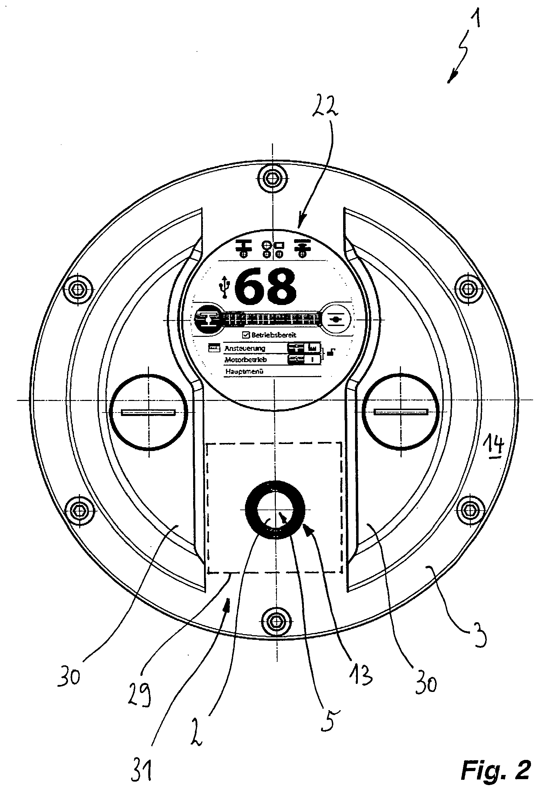

Fig. 1 und 2 zeigen unterschiedliche Ansichten eines im Ganzen mit 1 bezeichneten elektrischen Stellantriebs.

Der Stellantrieb 1 hat einen an sich bekannten, hier nicht weiter dargestellten Motor, mit welchem eine ebenfalls nicht weiter dargestellte Abtriebswelle antreibbar ist. An die Abtriebswelle ist ein nicht weiter dargestelltes und an sich bekanntes Ventil anschließbar.

Im Folgenden werden die Fig. 1. und 2 gemeinsam beschrieben.

An dem Stellantrieb 1 ist ein Bedienelement 2 ausgebildet, mit welchem wenigstens eine Bedienfunktion des Stellantriebs 1 bereitgestellt ist.

Das Bedienelement 2 ist außenseitig an einem Gehäuse 3 des Stellantriebs angeordnet und somit von außen zugänglich.

An dem Gehäuse 3 ist eine topfförmige Ausnehmung 4 ausgebildet. Bei weiteren Ausführungsbeispielen ist die Ausnehmung 4 in sonstiger Weise als nach außen öffnende Einsenkung ausgebildet, beispielsweise muldenförmig. Bei weiteren Ausführungsbeispielen bildet das Bedienelement 2 eine Ausnehmung, mit welcher es auf das Gehäuse 3 aufgesetzt ist.

Das Bedienelement 2 in Fig. 1 ist teilweise in die Ausnehmung 4 eingesetzt und ragt aus dieser heraus.

Das Bedienelement 2 ist rotationssymmetrisch um eine Achse 5 ausgebildet. Die Ausnehmung weist einen runden Querschnitt auf, der auf das Bedienelement 2 abgestimmt ist.

Das Bedienelement 2 ist somit in der Ausnehmung 4 um die Achse 5 drehbar angeordnet.

Das Bedienelement 2 hat ein erstes Ende 6, welches aus der Ausnehmung 4 hervorsteht. An diesem ersten Ende 6 kann die Betätigung von außen erfolgen.

Das Bedienelement 2 hat ein zweites Ende 7, welches in der Ausnehmung 4 angeordnet ist.

An diesem zweiten Ende 7 sind zwei magnetische Elemente 8 ausgebildet. Diese magnetischen Elemente 8 erzeugen ein Magnetfeld, dessen Linien zumindest zum Teil das Gehäuse 3 durchdringen. Die Anordnung der magnetischen Elemente 8 ist so gewählt, dass die Drehsymmetrie des Bedienelements 2 gebrochen ist.

Im Inneren 9 des Gehäuses 3 ist ein Magnetfeldsensor 10 angeordnet, mit welchem das Magnetfeld der magnetischen Elemente 8 und dessen Veränderung detektierbar sind.

Somit sind mit dem Magnetfeldsensor 10 die Lage und die Lageveränderung der magnetischen Elemente 8 erfassbar.

Da die magnetischen Elemente 8 fest an dem Bedienelement 10 angeordnet sind, korrespondiert die Lage der magnetischen Elemente 8 mit der Lage des Bedienelements 2. Somit sind Betätigungen des Bedienelements 2 am Magnetfeldsensor 10 detektierbar.

Das Bedienelement 2 kann beliebig oft in beiden Drehsinnen um die Achse 5 gedreht werden. Es ist kein Anschlag ausgebildet, der die Drehbewegung begrenzen würde.

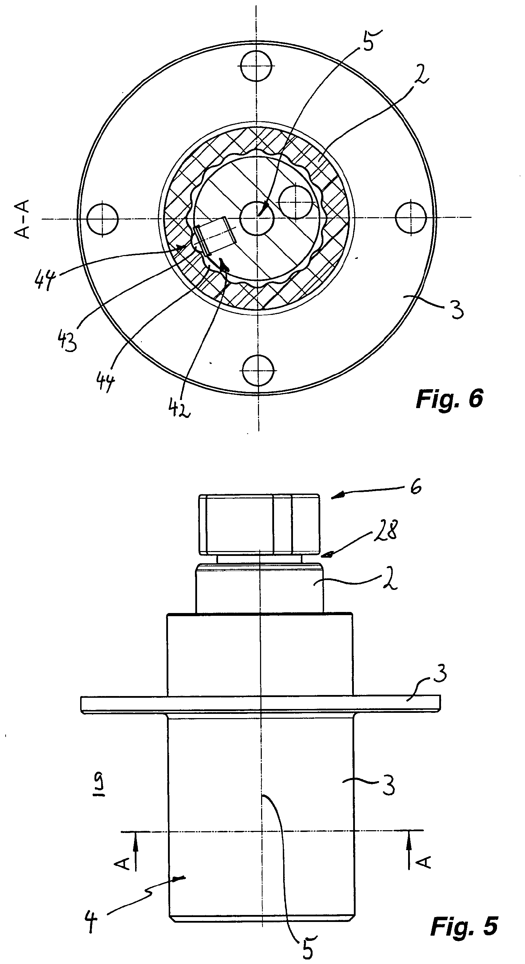

Mit einer zu den Figuren 5 und 6 näher beschriebenen Rasteinrichtung 42 ist der verfügbare Winkelbereich der Drehbewegung in Segmente unterteilt, durch welche das Bedienelement 2 an vorgegebenen Positionen in Bezug auf die Drehbewegung fixierbar ist.

Durch Drücken auf das erste Ende 6 kann das Bedienelement 2 zusätzlich entlang der Achse 5 in die Ausnehmung hinein verschoben werden.

In noch näher zu den Figuren 5 und 6 beschriebener Weise ist das Bedienelement 2 durch die Rasteinrichtung 42 für die Verschiebebewegung geführt.

Das Bedienelement 2 weist somit insgesamt zwei Bewegungsfreiheitsgrade auf: Rotation um die Achse 5 und Translation entlang der Achse 5. Beide Bewegungen können beliebig miteinander kombiniert werden.

Das von den magnetischen Elementen 8 erzeugte Magnetfeld ist am Magnetfeldsensor 10 umso stärker, je weiter das Bedienelement 2 in die Ausnehmung 4 hinein verschoben ist.

Somit kann die Lage der magnetischen Elemente 8 längs der Achse 5 erfasst werden.

Wird das Bedienelement 2 um seine Achse gedreht, so dreht sich ein Magnetfeldvektor am Ort des Magnetfeldsensors 10 in einer Ebene senkrecht zur Achse 5.

Der Magnetfeldsensor 10 ist aus mehreren Hall-Sensoren zusammengesetzt, die unterschiedlich im Raum orientiert sind, um die verschiedenen Komponenten des magnetischen Feldes von den magnetischen Elementen 8 zu detektieren. Somit ist auch eine Rotation des erwähnten Magnetfeldvektors am Magnetfeldsensor 10 detektierbar.

Bei weiteren Ausführungsbeispielen ist der Magnetfeldsensor 10 auf andere Weise zur dreidimensionalen Erfassung der Lage der magnetischen Elemente 8 eingerichtet. Der Magnetfeldsensor 10 kann beispielsweise auch aus GMR-Sensoren zusammengesetzt sein oder wenigstens einen GMR-Sensor aufweisen.

An den Magnetfeldsensor 10 ist eine Auswerteeinheit 11 angeschlossen, mit welcher die Ausgangssignale des Magnetfeldsensors 10 weiterverarbeitbar sind und weiterverarbeitet werden.

Mit der Auswerteeinheit 11 ist nicht nur die Lage der magnetischen Elemente 8 und damit des Bedienelements 2 bestimmbar. Es ist auch eine schnelle Betätigung von einer langsamen Betätigung dadurch unterscheidbar, dass eine Geschwindigkeit der Lageänderung bestimmt wird, insbesondere für die Drehbewegungen des Bedienelements 2.

Somit ist die Auswerteeinheit 11 zur Unterscheidung einer schellen Drehung des Bedienelements 2 von einer langsamen Drehung des Bedienelements 2 eingerichtet.

Die magnetischen Elemente 8 sind jeweils als ein Permanentmagnet 34, 35 ausgebildet.

Die Permanentmagneten 34, 35 der magnetischen Elemente 8 weisen in gegenläufige Richtungen und sind somit gegensinnig ausgerichtet.

Im Ausführungsbeispiel sind die magnetischen Elemente 8 sogar mit ihren jeweiligen Achsen 12 antiparallel zueinander ausgerichtet. Bei weiteren Ausführungsbeispielen können die Achsen 12 auch in einem Winkel zueinander gegensinnig ausgerichtet sein.

Durch die gegensinnige Ausrichtung wird erreicht, dass die Magnetfeldlinien aus einem Permanentmagneten 34 austreten und in einem Bogen am Magnetfeldsensor 10 vorbei zu dem anderen Permanentmagneten 35 verlaufen können, wo sie in diesen Permanentmagneten 35wieder eintreten.

Hierzu ist das Gehäuse 3 zumindest im Bereich der Ausnehmung 4 aus einem nicht-magnetischen Material, beispielsweise aus Aluminium oder einer Aluminiumlegierung, gefertigt. Die Magnetfeldlinien durchdringen somit das Gehäuse 3.

In Fig. 2 ist erkennbar, dass der in Fig. 1 gezeigte Ausschnitt des Gehäuses 3 Teil eines Deckels 14 ist. Dieser Deckel 14 ist bei dem Ausführungsbeispiel einstückig aus dem verwendeten nicht-magnetischen Material gefertigt. Der Deckel 14 ist in an sich von Stellantrieben 1 bekannter Weise mit weiteren Gehäuseteilen verbunden, wobei das Gehäuse 3 an den Verbindungsstellen abgedichtet ist.

Die Ausnehmung 4 ist einstückig in dem Gehäuse 3 ausgeformt. Das Gehäuse 3 ist somit nach außen abgedichtet.

Die Ausnehmung 4 ist nach außen abgedichtet. Hierzu ist ein Dichtring 13 - beispielsweise ein Wellendichtring - auf das runde Bedienelement 2 aufgesteckt.

Der Dichtring 13 ist so ausgestaltet und an dem Gehäuse 3 befestigt, dass ein Verschieben des Bedienelements 2 entlang der Achse 5 und eine Drehung des Bedienelements 2 um die Achse 5 möglich ist.

Wird das Bedienelement 2 entlang der Achse 5 in die Ausnehmung 4 hineingeschoben, so verdrängt es Luft. Es entsteht somit ein Überdruck, der der Verschiebungsbewegung entgegenwirkt.

Um diesen Überdruck auszugleichen, ist an dem Bedienelement 2 ein ringförmiger Ausgleichsraum 15 ausgebildet.

Dieser Ausgleichsraum 15 mündet über einen Ausgleichskanal 16 in die Ausnehmung 4.

An dem Bedienelement 2 ist in axialer Richtung hinter dem Ausgleichsraum 15 ein ringförmig umlaufender Vorsprung 41 ausgebildet. Bei Betätigung des Bedienelements 2 in die Ausnehmung 4 hinein öffnet sich zwischen dem Vorsprung 41 und dem Dichtring 13 ein weiterer Ausgleichsraum 39.

Dieser Ausgleichsraum 39 ist über einen Ausgleichskanal 40 mit dem Ausgleichsraum 15 verbunden.

Die verdrängte Luft kann somit in den Ausgleichsraum 15 und von diesem weiter über den Ausgleichskanal 40 in den sich öffnenden Ausgleichsraum 39 strömen, wodurch das Bedienelement 2 entlastet wird.

Das Volumen des Ausgleichsraums 39 nimmt hierbei in dem Maße zu, in welchem das Volumen, welches von dem zweiten Ende 7 des Bedienelements 2 in der Ausnehmung 4 eingeschlossen wird, vermindert wird. Die beim Drücken des Bedienelements 2 in die Ausnehmung 4 verdrängte Luft kann daher von dem Ausgleichsraum 39 aufgenommen werden.

Bei weiteren Ausführungsbeispielen kann der Ausgleichsraum 15 entfallen, wobei der Ausgleichskanal 16 als Ausgleichskanal 40 weitergeführt ist.

Zur Rückstellung des Bedienelements 2 nach der Betätigung in die Ausgangslage gemäß Fig. 1 ist an dem Bedienelement 2 ein Federelement 17 ausgebildet. Das Federelement 17 kann beispielsweise eine Schraubenfeder sein.

Bei dieser Rückstellbewegung des Bedienelements 2 wird die Luft aus dem Ausgleichsraum 39 in das von dem Bedienelement 2 in der Ausnehmung 4 eingeflossenen Volumen zurückgeführt, so dass in der Ausnehmung 4 kein Unterdruck entsteht. Es wird somit vermieden, dass möglicherweise feuchte Außenluft durch den Dichtring 13 in die Ausnehmung 4 gesaugt wird, wenn das Bedienelement 2 rückgeführt wird.

Die Vermeidung eines Aufbaus eines Unterdruckes bewirkt zusätzlich, dass der Rückstellbewegung des Bedienelements 2 kein zusätzlicher Widerstand entgegengesetzt wird. Das Bedienelement 2 kann somit in seine Ausgangsposition zurückgestellt werden.

Das Federelement 17 beaufschlagt mit einem Ende das Bedienelement 2 und mit dem anderen Ende ein Lagerelement 18.

Das Bedienelement 2 stützt sich somit über das Lagerelement 18 in der Ausnehmung 4 an dem Gehäuse 3 ab.

Der Dichtring 13 bildet einen Anschlag für das Bedienelement 2 und hält das Bedienelement 2 in der Ausgangsposition, solange es nicht von außen beaufschlagt wird.

Das Federelement 17 und das Lagerelement 18 sind konzentrisch zu der Achse 5 ausgerichtet.

Das Lagerelement 18 ist stiftförmig ausgebildet und berührt das Gehäuse 3 punktförmig in einem Auflagepunkt 19, der auf der Achse 5 liegt. Am Lagerelement 18 ist hierzu eine Spitze 20 ausgebildet.

Bei einer Drehbewegung um die Achse 5 wandert der Auflagepunkt somit nicht über das Gehäuse 3, sondern verbleibt am Durchstoßpunkt der Achse 5 durch das Gehäuse 3.

Im Stellantrieb 1 ist eine Ansteuerungseinheit 21 ausgebildet, die zur Ansteuerung einer Anzeigeeinheit 22 eingerichtet ist.

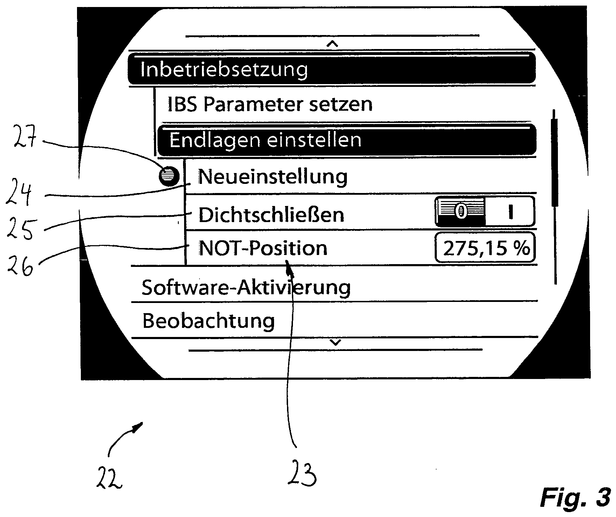

Fig. 3 zeigt beispielhaft einen Anzeigezustand der Anzeigeeinheit 22.

Die Anzeigeeinheit 22 zeigt in diesem Anzeigezustand eine Listendarstellung 23 einer Liste von Listeneinträgen 24, 25, 26, die ein Benutzer anwählen kann.

Hierzu steht das Bedienelement 2 - über den Magnetfeldsensor 10 und die Auswerteeinheit 11 - mit der Ansteuerungseinheit 21 in einer Steuerverbindung, so dass ein Drehen des Bedienelements 2 um die Achse 5 ein Wechseln zwischen den Listeneinträgen 24, 25, 26 bewirkt.

Der aktuell angewählte Listeneintrag 24 wird durch ein Anwahlsymbol 27 markiert.

Durch Drücken auf das Bedienelement 2 kann der angewählte Listeneintrag 24 aktiviert werden.

Wird das Bedienelement 2 langsam gedreht, so wechselt das Anwahlsymbol 27 von einem Listeneintrag 24 zum benachbarten Listeneintrag 25. Wird das Bedienelement 2 schnell gedreht, so springt das Anwahlsymbol 27 in der Listendarstellung 23 um eine von der Geschwindigkeit der Drehbewegung abhängige Schrittweite, beispielsweise direkt vom Listeneintrag 24 zum Listeneintrag 26.

Um unbefugte oder unbeabsichtigte Betätigungen des Bedienelements 2 zu verhindern, ist an dem Bedienelement 2 ein Befestigungsmittel 28 in Form einer umlaufenden Nut ausgebildet, an welchem ein Arretierungselement 29 befestigbar ist.

Das Arretierungselement 29 deckt das Bedienelement 2 nach außen ab, so dass eine Betätigung bei aufgesetztem Arretierungselement 29 ausgeschlossen ist.

Das Arretierungselement 29 wirkt formschlüssig mit Erhebungen 30 und Vertiefungen 31 an dem Gehäuse 3 zusammen und verhindert so, dass das Bedienelement 2 gemeinsam mit dem Arretierungselement 29 gedreht werden kann.

Das Arretierungselement 29 wird mit einem Sicherungselement 32 an dem Bedienelement 2 befestigt. Das Sicherungselement 32 greift hierbei als Gabel in die erwähnte Nut ein, so dass das Sicherungselement 32 in beliebiger Lage des Bedienelements 2 einbringbar ist.

Das Sicherungselement 32 ist mit einer Schließeinrichtung 33 abschließbar und somit gegen ein Entfernen sicherbar.

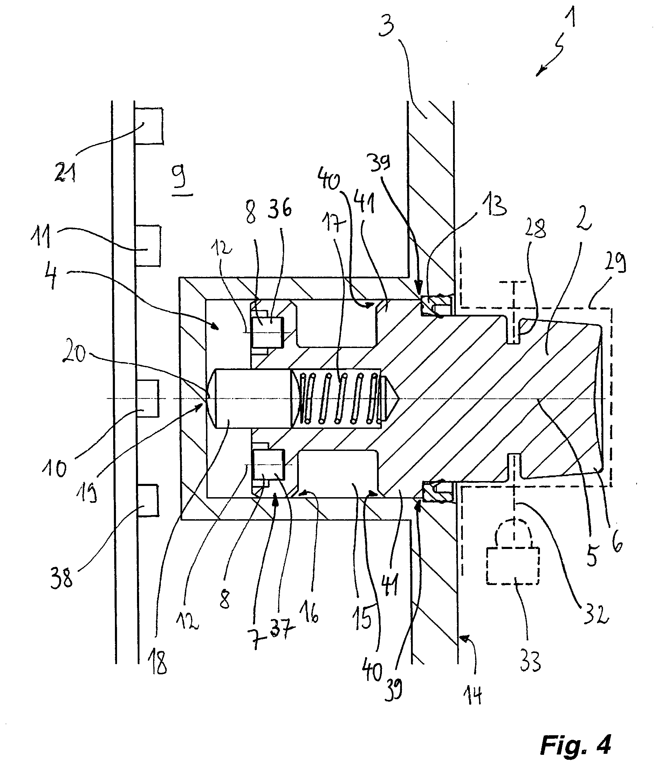

Fig. 4 zeigt einen Ausschnitt eines weiteren erfindungsgemäßen Stellantriebs 1 in einer Schnittdarstellung. Funktionell und/oder konstruktiv zu dem Ausführungsbeispiel gemäß Fig. 1 identische und/oder ähnliche Bauteile und Funktionseinheiten sind mit denselben Bezugszeichen bezeichnet und nicht noch einmal gesondert beschrieben. Die Ausführungen zu Fig. 1 bis 3 gelten somit beim Ausführungsbeispiel gemäß Fig. 4 entsprechend.

Das Ausführungsbeispiel gemäß Fig. 1 unterscheidet sich von dem vorangegangenen Ausführungsbeispiel dadurch, dass das wenigstens eine magnetische Element 8 zwei Para- oder Diamagnete 36, 37 umfasst. Das wenigstens eine magnetische Element 8 wirkt somit als magnetfeldveränderndes Element, indem es die magnetischen Feldlinien verdrängt oder bündelt.

Im Inneren 9 des Gehäuses 3 ist ein Permanentmagnet 38 angeordnet. Der Permanentmagnet 38 erzeugt ein Magnetfeld, welches mit dem Magnetfeldsensor 10 detektierbar ist.

Das wenigstens eine magnetische Element 8 beeinflusst durchseine para- oder diamagnetischen Eigenschaften den Verlauf dieser Feldlinien.

Somit ist die magnetische Feldstärke am Magnetfeldsensor 10 abhängig von der Lage des wenigstens einen magnetischen Elements 8. Am Magnetfeldsensor 10 ist somit eine Bewegung des Bedienelements 2 detektierbar, obwohl die Quelle des detektierten Magnetfeldes, der Permanentmagnet 38, unbeweglich relativ zum Magnetfeldsensor 10 verbleibt.

Der Permanentmagnet 38 kann bei weiteren Ausführungsbeispielen auch an anderen Positionen innerhalb oder außerhalb des Gehäuses 3 unbeweglich bezüglich der Position des Magnetfeldsensors 10 angeordnet sein.

Bei weiteren Ausführungsbeispielen ist statt des Permanentmagneten 38 ein anderer Magnet vorgesehen.

Bei weiteren Ausführungsbeispielen ist ein nichtelektrischer, beispielsweise ein pneumatischer oder hydraulischer oder mechanischer, Stellantrieb mit den hier beschriebenen Merkmalen ausgebildet.

Die Figuren 5 und 6 zeigen Einzelheiten des bereits beschriebenen Bedienelements 2. Zu den vorangehenden Ausführungsbeispielen gleichartige oder ähnliche Bauteile und Funktionseinheiten sind mit denselben Bezugszeichen bezeichnet und nicht noch einmal gesondert beschrieben. Die Ausführungen zu den vorangehenden Ausführungsbeispielen gelten daher zu Figur 5 und Figur 6 entsprechend.

In Figur 5 und Figur 6 ist ersichtlich, dass an dem Bedienelement 2 oder allgemein an den Stellantrieb 1 eine Rasteinrichtung 42 ausgebildet ist.

Die Rasteinrichtung 42 weist ein Rastelement 43 auf, welches von einer nicht weiter dargestellten Feder in Rastausnehmungen 44 gedrückt ist.

Jede der Rastausnehmungen 44 definiert eine Position des Bedienelements 2, in welcher das Bedienelement 2 bezüglich der Drehbewegung um die Achse 5 fixierbar ist.

Das Rastelement 43 ist in dem gezeigten Ausführungsbeispiel als Kugel oder Stift ausgeformt und bildet somit eine Kugelraste oder Stiftraste.

Die Rastausnehmungen 44 sind als Nuten, die längs der Achse 5 verlaufen, ausgebildet. Hierdurch ergibt sich eine Führung des Bedienelements 2 während der Drückbewegung oder Verschiebung längs der Achse 5, sobald das Rastelement 43 in eine der Rastausnehmungen 44 eingerastet ist.

Die Drehbewegung und die Drückbewegung sind somit für den Benutzer deutlich fühlbar unterscheidbar.

Dies ist besonders dann günstig, wenn die Drückbewegung zur Quittierung eines über die Drehbewegung eingestellten Wertes oder Menüpunktes vorgesehen ist.

Bei einem Stellantrieb 1 wird vorgeschlagen, ein dreh-und/oder schwenkbares Bedienelement 2 mit wenigstens einem magnetischen Element 8 außerhalb eines Gehäuses 3 anzuordnen und innerhalb des Gehäuses 3 einen Magnetfeldsensor 10 zur Detektion von Bewegungen des Bedienelements 2 einzurichten.

## Patentansprüche

1. Stellantrieb (1) mit wenigstens einem Bedienelement (2), das außenseitig an einem Gehäuse (3) des Stellantriebes (1) angeordnet ist, wobei das Bedienelement (2) wenigstens teilweise in eine am Gehäuse (3) ausgebildete Ausnehmung eingesetzt ist, wobei das Bedienelement (2) um eine Achse (5) dreh- und/oder schwenkbar an dem Gehäuse (3) angeordnet ist, wobei das Bedienelement (2) an dem Gehäuse (3) zusätzlich entlang der Achse (5) in die Ausnehmung hinein verschiebbar ist, und wobei an dem Bedienelement (2) wenigstens ein magnetisches Element (8) ausgebildet ist und im Inneren (9) des Gehäuses (3) ein Magnetfeldsensor (10) angeordnet ist, mit welchem eine Lage und/oder eine Lageänderung des magnetischen Elements (8) erfassbar ist.

2. Stellantrieb (1) nach Anspruch 1, **dadurch gekennzeichnet, dass** das Bedienelement (2) anschlagfrei drehbar angeordnet ist.

3. Stellantrieb (1) nach Anspruch 1 oder 2, **dadurch gekennzeichnet, dass** wenigstens eine Rasteinrichtung (42) zur Fixierung des Bedienelements (2) in wenigstens einer Position, bevorzugt in mehreren Positionen, ausgebildet ist, insbesondere wobei das Bedienelement (2) durch die wenigstens eine Rasteinrichtung (42) in einer Bedienrichtung fixiert und in einer weiteren Bedienrichtung geführt ist.

4. Stellantrieb (1) nach einem der Ansprüche 1bis 3, **dadurch gekennzeichnet, dass** der Magnetfeldsensor (10) wenigstens einen Hall-Sensor und/oder wenigstens einen GMR-Sensor aufweist und/oder dass der Magnetfeldsensor (10) zur dreidimensionalen Erfassung der Lage des wenigstens einen magnetischen Elements (8) eingerichtet ist.

5. Stellantrieb (1) nach einem der Ansprüche 1 bis 4, **dadurch gekennzeichnet, dass** eine Auswerteeinheit (11) an den Magnetfeldsensor (10) angeschlossen ist, die zur Bestimmung einer Geschwindigkeit der Lageänderung des wenigstens einen magnetischen Elements (8) eingerichtet ist.

6. Stellantrieb (1) nach einem der Ansprüche 1 bis 5, **dadurch gekennzeichnet, dass** das wenigstens eine magnetische Element (8) wenigstens einen Permanentmagneten (34, 35) aufweist und/oder dass an dem Bedienelement (2) zwei vorzugsweise gegensinnig zueinander ausgerichtete Permanentmagneten (34, 35) ausgebildet sind.

7. Stellantrieb (1) nach einem der Ansprüche 1 bis 6, **dadurch gekennzeichnet, dass** das wenigstens einen magnetische Element (8) wenigstens einen Para- oder Diamagneten aufweist und/oder dass ein bezüglich des Magnetfeldsensors (10) unbeweglicher Permanentmagnet (38) vorzugsweise im Inneren (9) des Gehäuses (3) ausgebildet ist.

8. Stellantrieb (1) nach einem der Ansprüche 1 bis 7, **dadurch gekennzeichnet, dass** an dem Gehäuse (3) eine Ausnehmung (4) ausgebildet ist, in die das Bedienelement (2) zumindest teilweise eingesetzt ist, und/oder dass das Gehäuse (3) zumindest im Bereich der Ausnehmung (4) aus einem nicht-magnetischen Material, insbesondere aus Aluminium, aus einer Aluminiumlegierung oder aus Kunststoff, gefertigt ist.

9. Stellantrieb (1) nach einem der Ansprüche 1 bis 8, **dadurch gekennzeichnet, dass** das Gehäuse (3) nach außen abgedichtet ist und/oder dass die Ausnehmung (4) durch einen auf das Bedienelement (2) aufgesteckten Dichtring (13) nach außen abgedichtet ist.

10. Stellantrieb (1) nach einem der Ansprüche 1 bis 9, **dadurch gekennzeichnet**, an dem Bedienelement (2) wenigstens ein Ausgleichsraum (15, 39) ausgebildet ist, welcher über wenigstens einen Ausgleichskanal (16, 40) in die oder eine Ausnehmung (4) mündet, insbesondere wobei ein Volumen des wenigstens einen Ausgleichsraums (15, 39) bei einer Betätigung des Bedienelements (2) in dem Maße zunimmt, in welchem ein von dem Bedienelement (2) in der Ausnehmung (4) eingeschlossenes Volumen bei der Betätigung des Bedienelements (2) vermindert ist.

11. Stellantrieb (1) nach einem der Ansprüche 1 bis 10, **dadurch gekennzeichnet, dass** an dem Bedienelement (2) ein Federelement (17) ausgebildet ist, mit welchem eine Rückstellkraft gegen eine Verschiebung entlang der Achse (5) entwickelbar ist, und/oder dass das oder ein Federelement ein Lagerelement (18) beaufschlagt, welches das Bedienelement (2), vorzugsweise in der oder einer Ausnehmung (4), am Gehäuse (3) abstützt.

12. Stellantrieb (1) nach einem der Ansprüche 1 bis 11, **dadurch gekennzeichnet, dass** das Lagerelement (18) stiftförmig ausgebildet und/oder konzentrisch zur Achse (5) ausgerichtet ist und/oder dass das Lagerelement (18) das Gehäuse (3) punktförmig berührt.

13. Stellantrieb (1) nach einem der Ansprüche 1 bis 12, **dadurch gekennzeichnet, dass** eine Ansteuerungseinheit (21) zur Generierung einer Listendarstellung (23) von Listeneinträgen (24, 25, 26) an einer Anzeigeeinheit (22) eingerichtet ist, wobei das Bedienelement (2) mit der Ansteuerungseinheit (21) in einer Steuerverbindung steht, durch welche ein Drehen des Bedienelements (2) um die Achse (5) ein Wechseln zwischen den Listeneinträgen (24, 25, 26) bewirkt.

14. Stellantrieb (1) nach einem der Ansprüche 1 bis 13, **dadurch gekennzeichnet, dass** an dem Bedienelement (2) ein Befestigungsmittel (28) ausgebildet ist, an welchem ein Arretierungselement (29) befestigbar ist und/oder dass das Bedienelement (2) mit dem Arretierungselement (29) abdeckbar ist.

15. Stellantrieb (1) nach einem der Ansprüche 1 bis 14, **dadurch gekennzeichnet, dass** das Arretierungselement (29) formschlüssig mit dem Gehäuse (3) zusammenwirkt, um eine Betätigung des Bedienelements (2) zu verhindern, und/oder dass das Arretierungselement (29) durch ein vorzugsweise abschließbares Sicherungselement (30) formschlüssig mit dem Bedienelement (2) und/oder mit dem Gehäuse (3) verbindbar ist.

## Claims

1. Actuator (1) having at least one operating element (2), which is arranged on the outside of a housing (3) of the actuator (1), wherein the operating element (2) is at least partly inserted into a recess formed on the housing (3), wherein the operating element (2) is arranged to be rotatable and/or pivotable about an axis (5) on the housing (3), wherein the operating element (2) is additionally displaceable on the housing (3) along the axis (5) into the recess, and wherein at least one magnetic element (8) is formed on the operating element (2), and a magnetic field sensor (10), with which a position and/or a position change of the magnetic element (8) can be detected, is arranged in the interior (9) of the housing (3).

2. Actuator (1) according to Claim 1, **characterized in that** the operating element (2) is arranged to be rotatable without a stop.

3. Actuator (1) according to Claim 1 or 2, **characterized in that** at least one latching device (42) is designed to fix the operating element (2) in at least one position, preferably in multiple positions, in particular wherein the operating element (2) is fixed in one operating direction and is guided in a further operating direction by the at least one latching device (42).

4. Actuator (1) according to one of Claims 1 to 3, **characterized in that** the magnetic field sensor (10) has at least one Hall sensor and/or at least one GMR sensor, and/or **in that** the magnetic field sensor (10) is set up for the three-dimensional detection of the position of the at least one magnetic element (8).

5. Actuator (1) according to one of Claims 1 to 4, **characterized in that** an evaluation unit (11) is connected to the magnetic field sensor (10) and is set up to determine a speed of the position change of the at least one magnetic element (8).

6. Actuator (1) according to one of Claims 1 to 5, **characterized in that** the at least one magnetic element (8) has at least one permanent magnet (34, 35), and/or in that two permanent magnets (34, 35) preferably aligned in opposite directions relative to each other are formed on the operating element (2).

7. Actuator (1) according to one of Claims 1 to 6, **characterized in that** the at least one magnetic element (8) has at least one paramagnet or diamagnet, and/or a permanent magnet (38) that is immovable with respect to the magnetic field sensor (10) is preferably formed in the interior (9) of the housing (3).

8. Actuator (1) according to one of Claims 1 to 7, **characterized in that** a recess (4) into which the operating element (2) is at least partly inserted is formed on the housing (3) , and/or **in that**, at least in the region of the recess (4), the housing (3) is made of a non-magnetic material, in particular of aluminium, or an aluminium alloy or plastic.

9. Actuator (1) according to one of Claims 1 to 8, **characterized in that** the housing (3) is sealed off with respect to the outside, and/or **in that** the recess (4) is sealed off with respect to the outside by a sealing ring (13) fitted onto the operating element (2).

10. Actuator (1) according to one of Claims 1 to 9, **characterized in that** at least one compensation chamber (15, 39) which opens into the or a recess (4) via at least one compensation channel (16, 40) is formed on the operating element (2), in particular wherein a volume of the at least one compensation chamber (15, 39) increases during an actuation of the operating element (2) to the extent to which a volume enclosed in the recess (4) by the operating element (2) is reduced during the actuation of the operating element (2).

11. Actuator (1) according to one of Claims 1 to 10, **characterized in that** a spring element (17), with which a restoring force counter to a displacement along the axis (5) can be developed, is formed on the operating element (2), and/or **in that** the or a spring element acts on a bearing element (18), which supports the operating element (2) on the housing (3), preferably in the or a recess (4).

12. Actuator (1) according to one of Claims 1 to 11, **characterized in that** the bearing element (18) is formed in the shape of a pin and/or is aligned concentrically with the axis (5), and/or **in that** the bearing element (18) touches the housing (3) at a point.

13. Actuator (1) according to one of Claims 1 to 12, **characterized in that** a control unit (21) for generating a list display (23) of list entries (24, 25, 26) is set up on a display unit (22), wherein the operating element (2) has a control connection to the control unit (21), by means of which a rotation of the operating element (2) about the axis (5) effects a change between the list entries (24, 25, 26).

14. Actuator (1) according to one of Claims 1 to 13, **characterized in that** a fastening means (28), to which a locking element (29) can be fixed, is formed on the operating element (2), and/or **in that** the operating element (2) can be covered by the locking element (29).

15. Actuator (1) according to one of Claims 1 to 14, **characterized in that** the locking element (29) interacts with the housing (3) in a form-fitting manner in order to prevent actuation of the operating element (2), and/or **in that** the locking element (29) can be connected to the operating element (2) and/or to the housing (3) in a form-fitting manner by a preferably lockable securing element (30).

## Revendications

1. Mécanisme de commande (1) comprenant au moins un élément de commande (2), qui est disposé extérieurement sur un boîtier (3) du mécanisme de commande (1), dans lequel l'élément de commande (2) est introduit au moins en partie dans un évidement formé dans le boîtier (3), dans lequel l'élément de commande (2) est disposé sur le boîtier (3) de façon rotative et/ou pivotante autour d'un axe (5), dans lequel l'élément de commande (2) peut en outre être déplacé sur le boîtier (3) dans l'évidement le long de l'axe (5), et dans lequel au moins un élément magnétique (8) est formé sur l'élément de commande (2) et un détecteur de champ magnétique (10) est disposé à l'intérieur (9) du boîtier (3), à l'aide duquel une position et/ou un changement de position de l'élément magnétique (8) peut être détecté(e).

2. Mécanisme de commande (1) selon la revendication 1, **caractérisé en ce que** l'élément de commande (2) est disposé de façon rotative sans butée.

3. Mécanisme de commande (1) selon la revendication 1 ou 2, **caractérisé en ce qu'**au moins un dispositif d'encliquetage (42) est réalisé en vue de la fixation de l'élément de commande (2) dans au moins une position, de préférence dans plusieurs positions, en particulier dans lequel l'élément de commande (2) est fixé dans une direction de commande et est guidé dans une autre direction de commande par ledit au moins un dispositif d'encliquetage (42).

4. Mécanisme de commande (1) selon l'une quelconque des revendications 1 à 3, **caractérisé en ce que** le détecteur de champ magnétique (10) présente au moins un détecteur de Hall et/ou au moins un détecteur GMR, et/ou **en ce que** le détecteur de champ magnétique (10) est conçu pour la détection tridimensionnelle de la position dudit au moins un élément magnétique (8).

5. Mécanisme de commande (1) selon l'une quelconque des revendications 1 à 4, **caractérisé en ce qu'**une unité d'évaluation (11) est reliée au détecteur de champ magnétique (10) et est conçue de manière à déterminer une vitesse du changement de position dudit au moins un élément magnétique (8).

6. Mécanisme de commande (1) selon l'une quelconque des revendications 1 à 5, **caractérisé en ce que** ledit au moins un élément magnétique (8) présente au moins un aimant permanent (34, 35), et/ou **en ce que** deux aimants permanents (34, 35), orientés de préférence en sens opposés l'un à l'autre, sont formés sur l'élément de commande (2).

7. Mécanisme de commande (1) selon l'une quelconque des revendications 1 à 6, **caractérisé en ce que** ledit au moins un élément magnétique (8) présente au moins un élément paramagnétique ou diamagnétique, et/ou **en ce qu'**un aimant permanent (38) immobile par rapport au détecteur de champ magnétique (10) est formé de préférence à l'intérieur (9) du boîtier (3).

8. Mécanisme de commande (1) selon l'une quelconque des revendications 1 à 7, **caractérisé en ce qu'**un évidement (4) est formé sur le boîtier (3), dans lequel l'élément de commande (2) est introduit au moins en partie, et/ou **en ce que** le boîtier (3) est fabriqué, au moins dans la région de l'évidement (4), en un matériau non magnétique, en particulier en aluminium, en un alliage d'aluminium ou en une matière plastique.

9. Mécanisme de commande (1) selon l'une quelconque des revendications 1 à 8, **caractérisé en ce que** le boîtier (3) est étanche vers l'extérieur et/ou **en ce que** l'évidement (4) est rendu étanche vers l'extérieur par un joint annulaire (13) qui est engagé sur l'élément de commande (2).

10. Mécanisme de commande selon l'une quelconque des revendications 1 à 9, **caractérisé en ce qu'**au moins une chambre d'équilibrage (15, 39) est formée sur l'élément de commande (2) et débouche par au moins un canal d'équilibrage (16, 40) dans le ou dans un évidement (4), en particulier dans lequel un volume de ladite au moins une chambre d'équilibrage (15, 39) augmente, lors d'un actionnement de l'élément de commande (2), dans la mesure dans laquelle un volume délimité par l'élément de commande (2) dans l'évidement (4) est réduit lors de l'actionnement de l'élément de commande (2).

11. Mécanisme de commande (1) selon l'une quelconque des revendications 1 à 10, **caractérisé en ce qu'**un élément de ressort (17) est formé sur l'élément de commande (2), à l'aide duquel une force de rappel peut être développée pour agir contre un déplacement le long de l'axe (5), et/ou **en ce que** ledit ou un élément de ressort agit contre un élément de support (18), qui appuie l'élément de commande (2) sur le boîtier (3), de préférence dans ledit ou dans un évidement (4).

12. Mécanisme de commande (1) selon l'une quelconque des revendications 1 à 11, **caractérisé en ce que** l'élément de support (18) est réalisé sous forme de tige et/ou est orienté de façon concentrique à l'axe (5) et/ou **en ce que** l'élément de support (18) touche le boîtier (3) de façon ponctuelle.

13. Mécanisme de commande (1) selon l'une quelconque des revendications 1 à 12, **caractérisé en ce qu'**une unité de commande (21) est configurée de manière à générer une liste représentative (23) d'entrées de liste (24, 25, 26) sur une unité d'affichage (22), dans lequel l'élément de commande (2) se trouve dans une liaison de commande avec l'unité de commande (21), par laquelle une rotation de l'élément de commande (2) autour de l'axe (5) entraîne un changement entre les entrées de liste (24, 25, 26).

14. Mécanisme de commande (1) selon l'une quelconque des revendications 1 à 13, **caractérisé en ce qu'**un moyen de fixation (28), auquel un moyen de blocage (29) peut être fixé, est formé sur l'élément de commande (2) et/ou **en ce que** l'élément de commande (2) peut être recouvert avec l'élément de blocage (29).

15. Mécanisme de commande (1) selon l'une quelconque des revendications 1 à 14, **caractérisé en ce que** l'élément de blocage (29) coopère par emboîtement avec le boîtier (3), afin d'empêcher un actionnement de l'élément de commande (2), et/ou **en ce que** l'élément de blocage (29) peut être assemblé par emboîtement avec l'élément de commande (2) et/ou avec le boîtier (3) par un élément de fixation (30) qui peut de préférence être fermé.
